# EUROPÄISCHE PATENTSCHRIFT

(11) **EP 3 109 216 B1**
(45) Veröffentlichungstag und Bekanntmachung des Hinweises auf die Patenterteilung: **16.09.2020**
(21) Anmeldenummer: 15001837.2
(22) Anmeldetag: 22.06.2015
(51) Int. Cl.: C04B 24/12, C04B 28/04, C04B 40/00, C04B 103/14

(54) **ERSTARRUNGS- UND ERHAERTUNGSBESCHLEUNIGER FUER HYDRAULISCHE BINDEMITTEL**
HARDENING AND SETTING ACCELERATOR FOR HYDRAULIC BINDING AGENTS
ACCÉLÉRATEUR DE SOLIDIFICATION ET DE DURCISSEMENT POUR LIANTS HYDRAULIQUES

(43) Veröffentlichungstag der Anmeldung: 28.12.2016
(73) Patentinhaber: HeidelbergCement AG, 69120 Heidelberg (DE)
(72) Erfinder: Nied, Dominik, 76135 Karlsruhe (DE); Zajac, Maciej, 69181 Leimen (DE)
(74) Vertreter: Zellentin & Partner mbB Patentanwälte

(56) Entgegenhaltungen:
- US-A- 5 084 103
- US-A1- 2010 187 114
- US-B1- 6 290 772

## Beschreibung

Die vorliegende Erfindung betrifft Zusatzmittel, welche die Festigkeitsentwicklung beschleunigen, für hydraulische Bindemittel, insbesondere für Portlandzement und Kompositzement, sowie ein Verfahren zur Beschleunigung der Festigkeitsentwicklung von hydraulischen Bindemitteln durch Zugabe des Zusatzmittels.

Eine beschleunigte Druckfestigkeitsentwicklung ist überwiegend erwünscht, denn sie bedeutet kürzere Wartezeiten, z.B. für einen Weiterbau, die Entschalung beispielsweise von Fertigbauteilen und vieles mehr.

Es sind bereits viele Substanzen bekannt, welche das Abbinden und Erhärten von hydraulischen Bindemitteln beschleunigen. Zu den am häufigsten verwendeten gehören Erdalkalichloride, stark alkalisch reagierende Stoffe wie Alkalihydroxide, Alkalikarbonate, Alkalisilikate, Alkalialuminate sowie Nitrate, Formiate, Thiocyanate, Nitrite, und Alkanolamine.

Viele dieser Substanzen werden aus unterschiedlichen Gründen als nachteilig betrachtet. So sind stark alkalische Substanzen im Hinblick auf die Arbeitssicherheit und je nach Menge auch in Bezug auf die Eigenschaften des erhärteten Baustoffs problematisch. Chloride fördern die Korrosion an Werkzeug und Maschinen und an Stahlteilen im Bauwerk. Nitrate wirken nur bei tiefen Temperaturen, Nitrite sind toxisch. Alkanolamine erscheinen insoweit vorteilhaft. Ein häufiges Problem bei Alkanolaminen und anderen Beschleunigern ist eine Verschlechterung der Verarbeitbarkeit, ein anderes eine Beeinträchtigung der Festigkeiten, besonders der Endfestigkeit nach 28 Tagen. Um diese Probleme zu überwinden wurden bereits verschiedene Kombinationen mit Alkanolaminen als Zusatzmittel vorgeschlagen. Beispielhaft seien genannt US 2004/0244655, US 4990190 A, US7556684 B2, US 5084103 A, US5605571 A und WO2013066192 A1.

Alkanonolamine sind außerdem als Mahlhilfsmittel bekannt, so dass bei einem Zusatz zum Zementklinker vor dem Vermahlen auch eine Verringerung der Mahlenergie bzw. eine feinere Vermahlung resultiert, siehe z.B. US 6,290,772 B1.

Obwohl die vorgeschlagenen Zusatzmittel, insbesondere die Kombinationen, von der Funktion her die Anforderungen erfüllen können, ist der Einsatz von komplexen Mischungen nicht ideal. Es wäre daher nach wie vor wünschenswert, ein Zusatzmittel aus wenigen Komponenten zur Verfügung zu haben, wobei dennoch die Festigkeitsentwicklung zuverlässig beschleunigt wird ohne Verarbeitbarkeit und Festigkeit zu beeinträchtigen.

Überraschend wurde nun gefunden, dass Alkanolamine von Polyalkoholen, insbesondere in Kombination mit Alkalisalzen wie Sulfaten, die Festigkeitsentwicklung beschleunigen, wobei ein ausgewogenes Verhältnis von Beschleunigung und Festigkeit erreicht wird. Die Beschleunigung der Frühfestigkeit ist mit derjenigen von bekannten Alkanolaminen mit einfachen Alkoholen als Substituent vergleichbar. Die Beschleunigung der Endfestigkeit mit dem erfindungsgemäßen Verfahren übertrifft die erzielbare Beschleunigung mit anderen Alkanolaminen, womit mit dem erfindungsgemäßen Verfahren geringere Dosierungen möglich sind.

Die obige Aufgabe wird daher gelöst durch ein Zusatzmittel, welches die Festigkeitsentwicklung von hydraulischen Bindemitteln beschleunigt, umfassend ein Alkanolamin der Formel 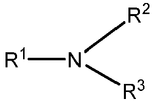 wobei R¹ für Alkyl mit mindestens 3 Hydroxygruppen steht und R² und R³ unabhängig voneinander für eine Alkylgruppe oder eine ein- oder mehrwertige Alkanolgruppe stehen, und ein Alkalisulfat. Die Aufgabe wird außerdem durch ein Verfahren zur Beschleunigung der Festigkeitsentwicklung von hydraulischen Bindemitteln gelöst, bei dem man dem Bindemittel ein Alkanolamin der Formel 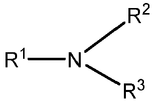 wobei R¹ für Alkyl mit mindestens 3 Hydroxygruppen steht und R² und R³ unabhängig voneinander für eine Alkylgruppe oder eine ein- oder mehrwertige Alkanolgruppe stehen, und ein Alkalisulfat zufügt. Durch das Alkanolamin wird die Festigkeit nach 1, 2 und 7 Tagen erhöht, die Endfestigkeit nach 28 Tagen bleibt hoch.

Um die weitere Beschreibung zu vereinfachen, werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen.

Soweit nichts anderes angegeben ist mit "reaktiv" eine hydraulische Reaktivität gemeint.

Im Rahmen der vorliegenden Erfindung meint Klinker ein Sinterprodukt, welches durch Brennen eines Ausgangsmaterials bei erhöhter Temperatur erhalten wird und zumindest eine hydraulisch reaktive Phase enthält. Brennen meint die Aktivierung durch Veränderungen einer oder mehrerer der Eigenschaften Chemismus, Kristallinität, Phasenzusammensetzung, dreidimensionale Anordnung und Bindungsverhalten der Gerüstatome durch die Zufuhr von thermischer Energie. Das Ausgangsmaterial kann im Einzelfall auch ein einzelner Rohstoff sein, wenn dieser alle gewünschten Substanzen in der richtigen Relation enthält, das ist aber die Ausnahme. Das Ausgangsmaterial kann auch Mineralisatoren enthalten. Als Mineralisatoren werden Stoffe bezeichnet, welche als Flussmittel wirken und/oder die Temperatur senken, die zur Bildung einer Schmelze notwendig ist, und /oder solche, die die Bildung der Klinkerverbindung fördern, wie zum Beispiel durch Mischkristallbildung und/oder Phasenstabilisierung. Mineralisatoren können im Ausgangsmaterial als Bestandteil enthalten sein oder gezielt zugefügt werden.

Mit Zement wird ein mit oder ohne Zusatz weiterer Komponenten gemahlener Klinker bezeichnet, aber auch andere hydraulisch erhärtende Materialien und Mischungen, beispielsweise aber nicht ausschließlich Sulfathüttenzement, Geopolymerzement und durch hydrothermale Umsetzung erhaltener Belitzement. Bindemittel oder Bindemittelmischung bezeichnet ein in Kontakt mit Wasser hydraulisch erhärtendes Material, welches Zement enthält und typischerweise aber nicht zwingend weitere, fein gemahlene Komponenten. Das Bindemittel gelangt nach Zusatz von Wasser, meist auch von Gesteinskörnung und ggfs. Zusatzmitteln, zur Anwendung.

Klinkerersatzmaterial oder SCM bezeichnet ein puzzolanisches und/oder latent-hydraulisches Material, das in einem Zement bzw. einem Bindemittel einen Teil des Klinkers ersetzt. Latent-hydraulisches Materialien weisen eine Zusammensetzung auf, die in Kontakt mit Wasser eine hydraulische Erhärtung ermöglicht, wobei typischerweise für eine Erhärtung in technisch nutzbaren Zeiträumen ein Anreger nötig ist. Mit Anreger oder Aktivator ist ein Material gemeint, welches die Erhärtung von latent-hydraulischen Materialien beschleunigt. Es kann sich um einen Zusatz handeln, etwa Sulfat oder Calcium(hydr)oxid und/oder um Produkte der hydraulischen Reaktion des Klinkers, z.B. setzen Calciumsilkate bei der Erhärtung Calciumhydroxid frei, welches als Anreger wirkt. Puzzolanische Materialien sind durch einen Gehalt an reaktionsfähigem Siliziumdioxid gekennzeichnet, welches bei der Hydratation eines Bindemittels mit in der wässrigen Phase vorhandenem Calciumhydroxid zu Festigkeits-bildenden Calciumsilikathydratphasen umgesetzt wird. In der Praxis ist die Grenze zwischen latent-hydraulischen und puzzolanischen Materialien fließend, z.B. können Flugaschen je nach Gehalt an Calciumoxid puzzolanisch oder latent-hydraulische Materialien sein. Mit SCM sind sowohl latent-hydraulische als auch puzzolanische Materialien gemeint. Von den SCM zu unterschieden sind jedoch unreaktive, mineralische Zusätze, wie Gesteinsmehl, welche an der hydraulischen Umsetzung des Bindemittels keinen Anteil haben. Teilweise werden SCM gemeinsam mit solchen Zusätzen als mineralische Zusätze zusammengefasst.

Das beschleunigende Zusatzmittel gemäß der Erfindung eignet sich besonders für Bindemittel, welche Portlandzement und Klinkerersatzmaterial als Zement enthalten. Bei diesen auch als Kompositzement bezeichneten Zementen verringert sich wegen des SCM Zusatzes die Frühfestigkeit meist stark. Kompositzemente sind aber in verschiedener Hinsicht bevorzugt. Der SCM Zusatz spart wertvolle Rohstoffe, senkt den Energieverbauch und verringert den CO₂ Ausstoss bei der Herstellung wesentlich. Anders als neue Zemente, bei denen Praxiserfahrung und häufig auch eine bauaufsichtliche Zulassung fehlen, kann mit Kompositzement unmittelbar der ökologische Fußabdruck vermindert werden.

Als Bindemittel kommen beispielsweise, aber nicht ausschließlich, Portlandzement, Hüttenzement, Puzzolanzement, Portlandhüttenzement, Portlandsilicastaubzement, Portlandpuzzolanzement, Portlandflugaschezement, Portlandschieferzement, Portlandkalksteinzement, Portlandkompositzement, Hochofenzement, Puzzolanzement, und Kompositzement gemäß EN 197 und nicht genormte Zemente mit latent-hydraulischen und/oder puzzolanischen Materialien als Bestandteil in Betracht. Bevorzugt sind Bindemittel, welche SCM umfassen.

Besonders bevorzugte Bindemittel umfassen als Zement von 95 bis 10 Gew.-% Portlandzement und von 5 bis 90 Gew.-% SCM. Noch mehr bevorzugte Bindemittel umfassen als Zement von 85 bis10 Gew.-% Portlandzement und von 15 bis 90 Gew.-% SCM. Ganz besonders bevorzugt sind von 75 bis 10 Gew.-% Portlandzement und von 25 bis 90 Gew.-% SCM enthalten.

Geeignete Klinkerersatzmaterialien sind beispielsweise Hüttensand, kalkreiche und kalkarme Flugaschen, natürliche und künstliche puzzolanische oder latent hydraulische Gläser. Auch calcinierter Ton, der z.B. wie in der US 5 626 665 A beschrieben durch Erhitzen auf 500 bis 800 °C erhalten wird, ist als Puzzolan brauchbar.

Daneben können auch als inerte Füllstoffe anzusehende Materialien wie insbesondere Kalkstein, Dolomit, wiederverwerteter Beton und Steinbruchstaub enthalten sein.

Das erfindungsgemäß als Beschleuniger verwendete Alkanolamin weist eine Alkylgruppe R¹ mit mindestens drei Hydroxygruppen auf. Alkyl steht bevorzugt für geradkettige oder verzweigte Kohlenwasserstoffreste mit 2 bis 6 C-Atomen, insbesondere mit 3 bis 5 C-Atomen. R¹ weist bevorzugt drei Hydroxygruppen auf, die wenn möglich vorzugsweise primäre Hydroxygruppen sind. Am meisten bevorzugt ist R¹ eine Tris(hydroxymethyl)methylgruppe. Die beiden Reste R² und R³ stehen für Alkyl- oder Alkanolgruppen, bevorzugt mit 1 bis 6 C-Atomen, insbesondere mit 1 bis 4 C-Atomen. Vorzugsweise stehen R² und R³ unabhängig voneinander für 2-Hydroxypropyl, 2-Hydroxyethyl, Methyl, Ethyl, Propyl, n-Butyl, i-Butyl oder t-Butyl.

Das Alkanolamin kann auch als Salz oder Ester einer organischen Säure vorliegen. Bevorzugte Säuren sind Carbonsäuren mit 1 bis 16 C-Atomen, insbesondere Ameisensäure, Essigsäure, Prop-2-ensäure, 2-Methylpropensäure, Zitronensäure, Fettsäure, Weinsäure und Oxalsäure.

Es hat sich bewährt, von 0,005 bis 0,5 Gew.-%, vorzugsweise von 0,01 bis 0,1 Gew.-%, Alkanolamin bezogen auf den Zement (inklusive SCM) zu dosieren.

In einer bevorzugten Ausführungsform wird das Alkanolamin beim Vermahlen des Zements zugefügt, so dass es seine Wirkung als Mahlhilfsmittel entfalten kann. In einer anderen bevorzugten Ausführungsform wird es dem Klinkerersatzmaterial, dem Zement, dem Mörtel oder Beton oder dem Anmachwasser zugefügt.

In einer bevorzugten Ausführungsform wird das Alkanolamin mit einem Ammoniumsalz, Alkalisalz und/oder Erdalkalisalz kombiniert. Das Salzanion ist vorzugsweise ausgewählt unter Hydroxid, Chlorid, Thiocyanat, Nitrat, Nitrit, Carbonat, Hydrogencarbonat, Acetat, Sulfat, Sulfit Format, Phenolat, Silikat, Glukonat und Mischungen davon. Die Menge liegt typischerweise im Bereich von 0,1 bis 5 Gew.-%, vorzugsweise im Bereich von 0,5 bis 2 Gew.-%, bezogen auf den Zement.

Das erfindungsgemäße Zusatzmittel enthält ein Alkalisulfat, insbesondere Natrium- und/oder Kaliumsulfat, ganz besonders bevorzugt Kaliumsulfat. Die Menge Alkalisulfat liegt typischerweise im Bereich von 0,1 bis 5 Gew.-%, vorzugsweise im Bereich von 0,5 bis 2 Gew.-%, bezogen auf den Zement.

Die beiden Komponenten Alkanolamin und Ammonium-, Alkali- bzw. Erdalkalisalz können zu einem Zusatzmittel vorgemischt werden, oder getrennt voneinander zugegeben werden. Die Zugabe kann vor dem Vermahlen erfolgen oder zum Klinkerersatzmaterial, Zement, Mörtel, Beton oder Anmachwasser.

Die Kombination des erfindungsgemäßen Beschleunigers mit anderen Beschleunigern ist zwar nicht bevorzugt, aber möglich. Hierfür eignen sich unter anderem Alkanolamine wie Mono-, Di- oder Triethanolamin, Mono-, Di- oder Triisopropanolamin, aber auch Tris(hydroxymethyl)aminomethan, N-Methyldiethanolamin, 2-Amino-2-methyl-1,3-propandiol, N-Butyldiethanolamin, N,N-Bis-(2-ydroxyethyl)-2-propanolamin, N,N-Bis-(2-ydroxypropyl)-N-(hydroxyethyl)amin, Di-(hydroxyethyl)-1,2-diaminopropan, Tetra-(hydroxyethyl)-1,2-diaminopropan, ein Ethoxy-tragendes Polyglycoldiamin, N,N,N'-Tri-(hydroxyethyl)ethylendiamin, N,N,N'-Tri-(hydroxyethyl)diethylendiamin, N,N'-Di-(hydroxyethyl)ethylendiamin, N,N'-Bis(2-hydroxypropyl)diethylentriamin, N,N,N',N'-Tetra(hydroxyethyl)ethylendiamin, N,N,N',N',N"-Penta(hydroxyethyl)diethylentriamin, N,N'-Bis-(2-hydroxypropyl)-N,N,N'-tri-(hydroxyethyl)diethylentriamin, Poly(hydroxyethyl)polyethylenimin, Poly(hydroxyalkyliertes)polyethylenamin, 1,2-Diaminopropan, Polyglycoldiamin oder Mischungen dieser. Eine Kombination mit diesen weiteren Beschleunigern kommt vor allem dann in Betracht, wenn eine besonders schnelle Festigkeitsentwicklung nötig ist.

Eine Kombination mit anderen Zusatzmitteln, z.B. mit Schwindreduzierern, Pigmenten, Schaumbildnern, Korrosionsinhibitoren, Verzögerern, Luftporenbildnern, Luftaustragungsmitteln und/oder Fließmitteln erfolgt nach Bedarf. Diese werden in den jeweils üblichen Dosierungen angewandt.

Im Bindemittel können neben Zement und dem erfindungsgemäßen Beschleuniger auch übliche Zusatzstoffe, beispielsweise Füllstoffe, Pigmente, Polymere, Fasern usw., enthalten sein. In der Regel wird das Bindemittel mit Gesteinskörnung und Wasser vermischt zu einem Mörtel oder Beton verarbeitet. Eine Verwendung in bauchemischen Produkten wie Estrich, Fugenmasse, Fliesekleber etc. ist auch möglich.

Eine besonders bevorzugte Anwendung stellt die Fertigteilproduktion dar, bei der eine schnelle Erhärtung auch ein schnelles Entschalen und damit kurze Produktionszyklen erlaubt.

Gesteinskörnungen werden bei der Verarbeitung von Bindemitteln zugefügt, vor allem um Bindemittel zu sparen. Üblich sind grobe Gesteinskörnungen wie Kies für Beton und feine Gesteinskörnungen für Beton, Mörtel, Putz, Estrich usw. Erfindungsgemäß kommen Gesteinskörnungen in an sich bekannter Weise zum Einsatz.

Auch die Wassermenge entspricht dem üblichen, typisch sind Wasser/Zement-Verhältnisse von 0,2 bis 1,5, je nach Anwendung.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Zur Untersuchung der Wirkung als Beschleuniger wurde ein Bindemittel (B1) aus 60 % Portlandzement, 20 % Flugasche und 20 % Kalksteinfüller hergestellt. Die Druckfestigkeitsentwicklung dieses Bindemittels wurde ohne Zugabe von Beschleuniger, mit Zugabe von 0,05 % Bis(2-hydroxyethyl)amino-tris(hydroxymethyl)methan (BisTris) und mit Zugabe von 0,05 % BisTris und 1 % Kaliumsulfat nach DIN EN 196 gemessen. Die Ergebnisse fasst Tabelle 1 zusammen.

**Tabelle 1 (die Ausführungsform ohne Alkalisulfat ist nicht erfindungsgemäß)**

| | Druckfestigkeit | |
|---|---|---|
| Bindemittel | 1 Tag | 28 Tage |
| B1 (Referenz) | 8 MPa | 50 MPa |
| B1 + 0,05 % BisTris | 10 MPa | 51 MPa |
| B1 + 0,05 % BisTris+ 1 % K₂SO₄ | 13 MPa | 50 MPa |

Die Ergebnisse belegen, dass der erfindungsgemäße Beschleuniger eine starke Beschleunigung der Festigkeitentwicklung hervorruft, während die Endfestigkeit nicht beeinträchtigt wird.

### Beispiel 2

Analog zu Beispiel 1 wurde die Wirksamkeit des erfindungsgemäßen Beschleunigers an einem Bindemittel (B2) aus 60 % Portlandzement, 20 % Metakaolin und 20 % Kalkstein bestimmt. Die Ergebnisse fasst Tabelle 2 zusammen.

**Tabelle 2 (die Ausführungsform ohne Alkalisulfat ist nicht erfindungsgemäß)**

| | Druckfestigkeit | |
|---|---|---|
| Bindemittel | 1 Tag | 28 Tage |
| B2 (Referenz) | 12 MPa | 54 MPa |
| B2 + 0,05 % BisTris | 11 MPa | 58 MPa |
| B2 + 0,05 % BisTris+ 1 % K₂SO₄ | 16 MPa | 54 MPa |

Die Ergebnisse belegen, dass der erfindungsgemäße Beschleuniger auch bei Kompositzementen mit kalziniertem Ton als SCM eine deutliche Erhöhung der Frühfestigkeit erreicht und wiederum die Endfestigkeit nicht beeinträchtigt.

### Beispiel 3

Die Wirkung der erfindungsgemäßen Kombination wurde mit derjenigen der beiden üblichen Alkanolamine Tri-isopropanolamin (TiPA) und N,N-Bis-(2-hydroxyethyl)-2-hydroxypropylamin (DEiPA) verglichen. Dazu wurde ein Bindemittel B3 aus 60 % Portlandzement, 20 % Metakaolin und 20 % Kalkstein hergestellt und die in Tabelle 3 angegebenen Substanzen als Beschleuniger zugefügt. In Tabelle 3 sind die gemessenen Druckfestigkeiten und die Werte relativ zu B3 angegeben.

**Tabelle 3 (die Ausführungsform ohne Alkanolamin ist nicht erfindungsgemäß)**

| | Druckfestigkeit | |
|---|---|---|
| Bindemittel | 2 Tage | 28 Tage |
| B3 (Referenz) | 18 MPa | 54 MPa |
| B3 + 1 % K₂SO₄ | 22 MPa | 51 MPa |
| B3 + 1 % K₂SO₄ + 0,05 % BisTris | 23 MPa | 56 MPa |
| B3 + 1 % K₂SO₄ + 0,1 % BisTris | 22 MPa | 58 MPa |
| B3 + 1 % K₂SO₄ + 0,1 % TiPA | 25 MPa | 54 MPa |
| B3 + 1 % K₂SO₄ + 0,05 % DEiPA | 24 MPa | 55 MPa |

Diese Versuche belegen, dass mit den erfindungsgemäßen Alkanolaminen eine ähnliche Beschleunigung der Frühfestigkeitsentwicklung erreicht werden kann, wie mit den üblichen, und dass die Endfestigkeit im Vergleich zu anderen Alkanolaminen noch weiter optimiert werden kann.

## Patentansprüche

1. Zusatzmittel, welches die Festigkeitsentwicklung von hydraulischen Bindemitteln beschleunigt, umfassend ein Alkanolamin der Formel 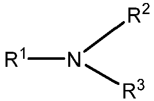 wobei R¹ für Alkyl mit mindestens 3 Hydroxygruppen steht und R² und R³ unabhängig voneinander für eine Alkylgruppe oder eine ein- oder mehrwertige Alkanolgruppe stehen, und ein Alkalisulfat.

2. Zusatzmittel gemäß Anspruch 1, **dadurch gekennzeichnet, dass** R¹ für eine Trihydroxyalkylgruppe mit 2 bis 6 C-Atomen, vorzugsweise mit 3 bis 5 C-Atomen und insbesondere für eine Tris(hydroxymethyl)methylgruppe steht.

3. Zusatzmittel gemäß Anspruch 1 oder 2, **dadurch gekennzeichnet, dass** die Alkyl- oder Alkanolgruppe von R² und R³ von 1 bis 6 C-Atome, vorzugsweise von 1 bis 4 C-Atome, aufweist.

4. Zusatzmittel gemäß einem der vorhergehenden Ansprüche, **dadurch gekennzeichnet, dass** zusätzlich ein Beschleuniger, Schwindreduzierer, Pigmente, Schaumbildner, Korrosionsinhibitoren, Verzögerer, Luftporenbildner, Luftaustragungsmittel und/oder Fließmittel enthalten ist.

5. Zusatzmittel gemäß einem der vorhergehenden Ansprüche, **dadurch gekennzeichnet, dass** zusätzlich mindestens ein weiteres Alkanolamin, ausgewählt unter Mono-, Di- und Triethanolamin, Mono-, Di- und Triisopropanolamin, Tris(hydroxymethyl)aminomethan, N-Methyldiethanolamin, 2-amino-2-methyl-1,3-propandiol, N-Butyldiethanolamin, N,N-Bis-(2-hydroxyethyl)-2-propanolamin, N,N-Bis-(2-hydroxypropyl)-N-(hydroxyethyl)amin, Di-(hydroxyethyl)-1,2-diaminopropan, Tetra-(hydroxyethyl)-1,2-diaminopropan, Ethoxy-tragendes Polyglycoldiamin, N,N,N'-Tri-(hydroxyethyl)ethylendiamin, N,N,N'-Tri-(hydroxyethyl)diethylendiamin, N,N'-Di-(hydroxyethyl)ethylendiamin, N,N'-Bis-(2-hydroxypropyl)diethylentriamin, N,N,N',N'-Tetra-(hydroxyethyl)ethylendiamin, N,N,N',N',N"-Penta-(hydroxyethyl)diethylentriamin, N,N'-Bis-(2-hydroxypropyl)-N,N,N'-tri-(hydroxyethyl)diethylentriamin, Poly(hydroxyethyl)polyethylenimin, Poly(hydroxy-alkyliertes)polyethylenamin, 1,2-Diaminopropan, Polyglycoldiamin und Mischungen dieser, enthalten ist.

6. Zusatzmittel gemäß einem der vorhergehenden Ansprüche, dadurch gekennzeichent, dass zusätzlich ein organisches Polyol aus der Gruppe der C₂-C₆ Polyole oder Gemischen dieser enthalten ist.

7. Zusatzmittel gemäß einem der vorhergehenden Ansprüche, **dadurch gekennzeichnet, dass** zusätzlich ein wasserlösliches Ammoniumsalz, Alkalisalz oder Erdalkalisalz enthalten ist.

8. Zusatzmittel gemäß Anspruch 7, **dadurch gekennzeichnet, dass** das Salz ein Hydroxid, Chlorid, Thiocyanat, Nitrat, Nitrit, Carbonat, Hydrogencarbonat, Acetat, Sulfat, Sulfit Format, Phenolat, Silikat, Glukonat oder Mischungen davon ist.

9. Zusatzmittel gemäß Anspruch 8, **dadurch gekennzeichnet, dass** das Alkalisulfat Natrium- und/oder Kaliumsulfat ist.

10. Zusatzmittel gemäß einem der vorhergehenden Ansprüche, **dadurch gekennzeichnet, dass** das Alkanolamin als Salz oder Ester einer organischen Säure vorliegt.

11. Verfahren zur Beschleunigung der Festigkeitsentwicklung von hydraulischen Bindemitteln, **dadurch gekennzeichnet, dass** dem hydraulischehn Bindemittel ein Alkanolamin der Formel 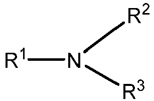 wobei R¹ für Alkyl mit mindestens 3 Hydroxygruppen steht und R² und R³ unabhängig voneinander für eine Alkylgruppe oder eine ein- oder mehrwertige Alkanolgruppe stehen, und ein Alkalisulfat zugefügt werden.

12. Verfahren gemäß Anspruch 11, **dadurch gekennzeichnet, dass** das Alkanolamin in einer Menge von 0,005 bis 0,5 Gew.-%, vorzugsweise von 0,01 bis 0,1 Gew.-% bezogen auf den Zement zugefügt wird.

13. Verfahren gemäß Anspruch 11 oder 12, **dadurch gekennzeichnet, dass** zusätzlich ein wasserlösliches Ammoniumsalz, Alkalisalz oder Erdalkalisalz, insbesondere ein Hydroxid, Chlorid, Thiocyanat, Nitrat, Nitrit, Carbonat, Hydrogencarbonat, Acetat, Sulfat, Sulfit Format, Phenolat, Silikat und/oder Glukonat, zugefügt wird.

14. Verfahren gemäß Anspruch 11 oder 12, **dadurch gekennzeichnet, dass** Natrium- und/oder Kaliumsulfat, zugefügt wird/werden.

15. Verfahren gemäß Anspruch 13 oder 14, **dadurch gekennzeichnet, dass** das Ammoniumsalz, Alkalisalz und/oder Erdalkalisalz in einer Menge von 0,1 bis 5 Gew.-%, vorzugsweise von 0,5 bis 2 Gew.-%, bezogen auf den Zement, zugefügt wird.

16. Verfahren gemäß einem der Ansprüche 11 bis 15, **dadurch gekennzeichnet, dass** das hydraulische Bindemittel ein Kompositzement umfassend Portlandzement und Klinkerersatzmaterial ist.

17. Verfahren gemäß einem der Ansprüche 11 bis 16, **dadurch gekennzeichnet, dass** das Alkanolamin dem Zementklinker vor dem Mahlen zugefügt wird.

18. Verfahren gemäß einem der Ansprüche 11 bis 16, **dadurch gekennzeichnet, dass** das Alkanolamin dem gemahlenen Zement, dem Bindemittel oder dem Anmachwasser zugefügt wird.

19. Verwendung eines Zusatzmittels umfassend ein Alkanolamin der Formel 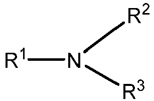 wobei R¹ für Alkyl mit mindestens 3 Hydroxygruppen steht und R² und R³ unabhängig voneinander für eine Alkylgruppe oder eine ein- oder mehrwertige Alkanolgruppe stehen, und ein Alkalisulfat zur Beschleunigung der Festigkeitsentwicklung von hydraulischen Bindemitteln.

20. Verwendung gemäß Anspruch 19, **dadurch gekennzeichnet, dass** R¹ für eine Trihydroxyalkylgruppe mit 2 bis 6 C-Atomen, vorzugsweise mit 3 bis 5 C-Atomen und insbesondere für eine Tris(hydroxymethyl)methylgruppe steht.

21. Verwendung gemäß Anspruch 19 oder 20, **dadurch gekennzeichnet, dass** die Alkyl- oder Alkanolgruppe von R² und R³ von 1 bis 6 C-Atome, vorzugsweise von 1 bis 4 C-Atome, aufweist.

22. Verwendung gemäß einem der Ansprüche 19 bis 21, **dadurch gekennzeichnet, dass** zusätzlich ein Beschleuniger, Schwindreduzierer, Pigmente, Schaumbildner, Korrosionsinhibitoren, Verzögerer, Luftporenbildner, Luftaustragungsmittel und/oder Fließmittel enthalten ist.

23. Verwendung gemäß einem der Ansprüche 19 bis 22, **dadurch gekennzeichnet, dass** zusätzlich mindestens ein weiteres Alkanolamin, ausgewählt unter Mono-, Di- und Triethanolamin, Mono-, Di- und Triisopropanolamin, Tris(hydroxymethyl)aminomethan, N-Methyldiethanolamin, 2-amino-2-methyl-1,3-propandiol, N-Butyldiethanolamin, N,N-Bis-(2-hydroxyethyl)-2-propanolamin, N,N-Bis-(2-hydroxypropyl)-N-(hydroxyethyl)amin, Di-(hydroxyethyl)-1,2-diaminopropan, Tetra-(hydroxyethyl)-1,2-diaminopropan, Ethoxy-tragendes Polyglycoldiamin, N,N,N'-Tri-(hydroxyethyl)ethylendiamin, N,N,N'-Tri-(hydroxyethyl)diethylendiamin, N,N'-Di-(hydroxyethyl)ethylendiamin, N,N'-Bis-(2-hydroxypropyl)diethylentriamin, N,N,N',N'-Tetra-(hydroxyethyl)ethylendiamin, N,N,N',N',N"-Penta-(hydroxyethyl)diethylentriamin, N,N'-Bis-(2-hydroxypropyl)-N,N,N'-tri-(hydroxyethyl)diethylentriamin, Poly(hydroxyethyl)polyethylenimin, Poly(hydroxy-alkyliertes)polyethylenamin, 1,2-Diaminopropan, Polyglycoldiamin und Mischungen dieser, enthalten ist.

24. Verwendung gemäß einem der Ansprüche 19 bis 23, dadurch gekennzeichent, dass zusätzlich ein organisches Polyol aus der Gruppe der C₂-C₆ Polyole oder Gemischen dieser enthalten ist.

25. Verwendung gemäß einem der Ansprüche 19 bis 24, **dadurch gekennzeichnet, dass** zusätzlich ein wasserlösliches Ammoniumsalz, Alkalisalz oder Erdalkalisalz enthalten ist.

26. Verwendung gemäß Anspruch 25, **dadurch gekennzeichnet, dass** das Salz ein Hydroxid, Chlorid, Thiocyanat, Nitrat, Nitrit, Carbonat, Hydrogencarbonat, Acetat, Sulfat, Sulfit Format, Phenolat, Silikat, Glukonat oder Mischungen davon ist.

27. Verwendung gemäß einem der Ansprüche 19 bis 26, **dadurch gekennzeichnet, dass** Natrium- und/oder Kaliumsulfat, enthalten ist.

28. Verwendung gemäß einem der vorhergehenden Ansprüche, **dadurch gekennzeichnet, dass** das Alkanolamin als Salz oder Ester einer organischen Säure vorliegt.

## Claims

1. Admixture, which accelerates the strength development of hydraulic binders, comprising an alkanolamine of the formula 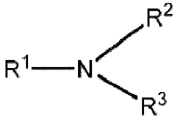 wherein R¹ is alkyl having at least 3 hydroxy groups and R² and R³ are independently of each other an alkyl group or a mono- or polyvalent alkanol group, and an alkali sulfate.

2. Admixture according to claim 1, **characterized in that** R¹ is a trihydroxyalkyl group having 2 to 6 C atoms, preferably 3 to 5 C atoms, and in particular a tris(hydroxymethyl)methyl group.

3. Admixtures according to claim 1 or 2, **characterized in that** the alkyl or alkanol group of R² and R³ has from 1 to 6 C atoms, preferably from 1 to 4 C atoms.

4. Admixture according to one of the preceding claims, **characterized in that** additionally an accelerator, shrinkage reducer, pigments, foaming agents, corrosion inhibitors, retarders, air-entraining agents, air-discharging agents and/or superplasticizers are contained.

5. Admixture according to one of the preceding claims, **characterized in that** additionally at least one further alkanolamine selected from mono-, di- and triethanolamine, mono-, di- and triiso-propanolamine, tris(hydroxymethyl)aminomethane, N-methyldiethanolamine, 2-amino-2-methyl-1,3-propanediol, N-butyldiethanolamine, N,N-bis-(2-hydroxyethyl)-2-propanolamine, N,N-bis-(2-hydroxypropyl)-N-(hydroxyethyl)amine, di-(hydroxyethyl)-1,2-diaminopropane, tetra-(hydroxyethyl)-1,2-diaminopropane, polyglycol diamine carrying ethoxy, N,N,N'-tri-(hydroxy-ethyl)ethylenediamine, N,N,N'-tri-(hydroxyethyl)diethylenediamine, N,N'-di-(hydroxyethyl)ethylenediamine, N,N'-bis-(2-hydroxypropyl)diethylenetriamine, N,N,N',N'-tetra-(hydroxyethyl)ethylenediamine, N,N,N',N' N"-penta-(hydroxy-ethyl)diethylenetriamine, N,N'-bis-(2-hydroxypropyl)-N,N,N'-tri-(hydroxy-ethyl)diethylenetriamine, poly(hydroxyethyl)polyethyleneimine, poly(hydroxy-alkylated)polyethyleneamine, 1,2-diaminopropane, polyglycoldiamine and mixtures thereof.

6. Admixtures according to one of the preceding claims, **characterized in that** an organic polyol from the group of C₂-C₆ polyols or mixtures thereof is additionally contained.

7. Admixtures according to one of the preceding claims, **characterized in that** a water-soluble ammonium salt, alkali metal salt or alkaline earth metal salt is additionally contained.

8. Admixture according to claim 7, **characterised in that** the salt is a hydroxide, chloride, thiocyanate, nitrate, nitrite, carbonate, hydrogen carbonate, acetate, sulphate, sulphite, formate, phenolate, silicate, gluconate or mixtures thereof.

9. Admixtures according to claim 8, **characterised in that** the alkali sulphate is sodium and/or potassium sulphate.

10. Admixture according to any of the preceding claims, **characterized in that** the alkanolamine is present as a salt or ester of an organic acid.

11. Method for accelerating the strength development of hydraulic binders, **characterized in that** an alkanolamine of the formula 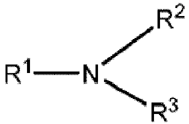 wherein R¹ is alkyl having at least 3 hydroxy groups and R² and R³ are independently of each other an alkyl group or a mono- or polyvalent alkanol group, and an alkali sulfate are added.

12. Method according to claim 11, **characterized in that** the alkanolamine is added in an amount from 0.005 to 0.5 % by weight, preferably from 0.01 to 0.1 % by weight, based on the cement.

13. Method according to claim 11 or 12, **characterized in that** a water-soluble ammonium salt, alkali metal salt or alkaline earth metal salt, in particular a hydroxide, chloride, thiocyanate, nitrate, nitrite, carbonate, hydrogen carbonate, acetate, sulphate, sulphite, formiate, phenolate, silicate and/or gluconate, is additionally added.

14. Method according to claim 11 or 12, **characterised in that** sodium and/or potassium sulphate is/are added.

15. Method according to claim 13 or 14, **characterized in that** the ammonium salt, alkali metal salt and/or alkaline earth metal salt is/are added in an amount from 0.1 to 5 % by weight, preferably from 0.5 to 2 % by weight, based on the cement.

16. Method according to any one of claims 11 to 15, **characterized in that** the hydraulic binder is a composite cement comprising Portland cement and supplementary cementitious material.

17. Method according to any one of claims 11 to 16, **characterized in that** the alkanolamine is added to the cement clinker before grinding.

18. Method according to any one of claims 11 to 16, **characterized in that** the alkanolamine is added to the ground cement, the binder or the mixing water.

19. Use of an admixture comprising an alkanolamine of the formula 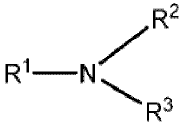 where R¹ is alkyl having at least 3 hydroxyl groups and R² and R³ are independently of each other an alkyl group or a mono- or polyvalent alkanol group, and an alkali metal sulfate for accelerating the strength development of hydraulic binders.

20. Use according to claim 19, **characterized in that** R¹ is a trihydroxyalkyl group having 2 to 6 C atoms, preferably having 3 to 5 C atoms, and in particular a tris(hydroxymethyl)methyl group.

21. Use according to claim 19 or 20, **characterized in that** the alkyl or alkanol group of R² and R³ has from 1 to 6 C atoms, preferably from 1 to 4 C atoms.

22. Use according to one of claims 19 to 21, **characterized in that** an accelerator, shrinkage reducer, pigments, foaming agents, corrosion inhibitors, retarders, air-entrainment agents, air-discharging agents and/or flow agents are additionally contained.

23. Use according to one of claims 19 to 22, **characterized in that** additionally at least one further alkanolamine selected from mono-, di- and triethanolamine, mono-, di- and triiso-propanolamine, tris(hydroxymethyl)aminomethane, N-methyldiethanolamine, 2-amino-2-methyl-1,3-propanediol, N-butyldiethanolamine, N,N-bis-(2-hydroxyethyl)-2-propanolamine, N,N-bis-(2-hydroxypropyl)-N-(hydroxyethyl)amine, di-(hydroxyethyl)-1,2-diaminopropane, tetra-(hydroxyethyl)-1,2-diaminopropane, polyglycol diamine carrying ethoxy, N,N,N'-tri-(hydroxyethyl)ethylenediamine, N,N,N'-tri-(hydroxyethyl)diethylenediamine, N,N'-di-(hydroxyethyl)ethylenediamine, N,N'-Bis-(2-hydroxypropyl)diethylenetriamine, N,N,N',N'-tetra-(hydroxyethyl)ethylenediamine, N,N,N',N' N"-penta-(hydroxy-ethyl)diethylenetriamine, N,N'-bis-(2-hydroxypropyl)-N,N,N'-tri-(hydroxy-ethyl)diethylenetriamine, poly(hydroxyethyl)poly-ethyleneimine, poly(hydroxy-alkylated)polyethyleneamine, 1,2-diaminopropane, polyglycoldiamine and mixtures thereof.

24. Use according to one of claims 19 to 23, **characterized in that** an organic polyol from the group of C₂-C₆ polyols or mixtures thereof is additionally contained.

25. Use according to one of claims 19 to 24, **characterized in that** a water-soluble ammonium salt, alkali metal salt or alkaline earth metal salt is additionally contained.

26. Use according to claim 25, **characterized in that** the salt is a hydroxide, chloride, thiocyanate, nitrate, nitrite, carbonate, hydrogen carbonate, acetate, sulfate, sulfite, formate, phenolate, silicate, gluconate or mixtures thereof.

27. Use according to one of claims 19 to 26, **characterized in that** sodium and/or potassium sulfate is contained.

28. Use according to one of the preceding claims, **characterized in that** the alkanolamine is present as a salt or ester of an organic acid.

## Revendications

1. Adjuvant visant à accélérer la prise de liants hydrauliques, comprenant une alkanolamine répondant à la formule 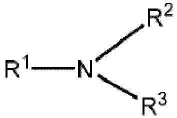 dans laquelle R¹ représente un alkyle pourvu d'au moins 3 groupes hydroxyle et R² et R³ représentent, indépendamment l'un de l'autre, un groupe alkyle ou un groupe alkanol mono- ou polyvalent, ainsi qu'un sulfate alcalin.

2. Adjuvant selon la revendication 1, **caractérisé en ce que** R¹ représente un groupe trihydroxyalkyle renfermant 2 à 6 atomes de C, de préférence 3 à 5 atomes de C, et notamment un groupe tris-(hydroxyméthyl)méthyle.

3. Adjuvant selon les revendications 1 ou 2, **caractérisé en ce que** le groupe alkyle ou alkanol de R² et de R³ comprend 1 à 6 atomes de C, de préférence 1 à 4 atomes de C.

4. Adjuvant selon l'une des revendications précédentes, **caractérisé en ce qu'**en outre, un agent accélérateur, un agent réducteur de retrait, des pigments, des agents moussants, des inhibiteurs de corrosion, des agents retardateurs, des agents formateurs de pores d'air, des agents d'élimination d'air et/ou des agents plastifiants sont contenus.

5. Adjuvant selon l'une des revendications précédentes, **caractérisé en ce qu'**en outre, au moins une autre alkanolamine est contenue, choisie parmi la mono-, di- et triéthanolamine, la mono-, di- et triisopropanolamine, le tris-(hydroxyméthyl)aminométhane, la N-méthyldiéthanolamine, le 2-amino-2-méthyl-1,3-propanediol, la N-butyldiéthanolamine, la N,N-bis-(2-hydroxyéthyl)-2-propanolamine, la N,N-bis-(2-hydroxypropyl)-N-(hydroxyéthyl)amine, le di(hydroxyéthyl)-1,2-diaminopropane, le tétra-(hydroxyéthyl)-1,2-diaminopropane, une polyglycoldiamine pourvue de groupes éthoxy, la N,N,N'-tri(hydroxyéthyl)éthylènediamine, la N,N,N'-tri(hydroxyéthyl)diéthylènediamine, la N,N'-di(hydroxyéthyl)éthylènediamine, la N,N'-bis-(2-hydroxypropyl)diéthylènetriamine, la N,N,N',N'-tétra(hydroxyéthyl)éthylènediamine, la N,N,N',N',N"-penta(hydroxyéthyl)diéthylènetriamine, la N,N'-bis-(2-hydroxypropyl)-N,N',Ni-tri(hydroxyéthyl)diéthylènetriamine, la poly(hydroxyéthyl)polyéthylèneimine, la poly(hydroxyalkylée)polyéthylèneamine, le 1,2-diaminopropane, la polyglycoldiamine et leurs mélanges.

6. Adjuvant selon l'une des revendications précédentes, **caractérisé en ce qu'**en outre, un polyol organique est contenu, issu du groupe des polyols en C₂-C₆ ou de leurs mélanges.

7. Adjuvant selon l'une des revendications précédentes, **caractérisé en ce qu'**en outre, un sel d'ammonium, sel alcalin ou sel alcalinoterreux de nature hydrosoluble est contenu.

8. Adjuvant selon la revendication 7, **caractérisé en ce que** ledit sel est un hydroxyde, chlorure, thiocyanate, nitrate, nitrite, carbonate, bicarbonate, acétate, sulfate, sulfite, formiate, phénolate, silicate, gluconate ou l'un de leurs mélanges.

9. Adjuvant selon la revendication 8, **caractérisé en ce que** ledit sulfate alcalin est du sulfate de sodium et/ou de potassium.

10. Adjuvant selon l'une des revendications précédentes, **caractérisé en ce que** ladite alkanolamine se présente sous forme d'un sel ou d'un ester d'un acide organique.

11. Procédé d'accélération de la prise de liants hydrauliques, **caractérisé en ce que** l'on ajoute au liant hydraulique une alkanolamine répondant à la formule 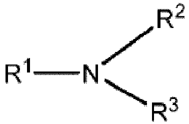 dans laquelle R¹ représente un alkyle pourvu d'au moins 3 groupes hydroxyle et R² et R³ représentent, indépendamment l'un de l'autre, un groupe alkyle ou un groupe alkanol mono- ou polyvalent, ainsi qu'un sulfate alcalin.

12. Procédé selon la revendication 11, **caractérisé en ce que** l'on ajoute ladite alkanolamine dans une quantité de 0,005 à 0,5 % en poids, de préférence de 0,01 à 0,1 % en poids, par rapport au ciment.

13. Procédé selon les revendications 11 ou 12, **caractérisé en ce que** l'on ajoute, en outre, un sel d'ammonium, sel alcalin ou sel alcalinoterreux de nature hydrosoluble, notamment un hydroxyde, chlorure, thiocyanate, nitrate, nitrite, carbonate, bicarbonate, acétate, sulfate, sulfite, formiate, phénolate, silicate et/ou gluconate.

14. Procédé selon les revendications 11 ou 12, **caractérisé en ce que** l'on ajoute du sulfate de sodium et/ou de potassium.

15. Procédé selon les revendications 13 ou 14, **caractérisé en ce que** l'on ajoute ledit sel d'ammonium, sel alcalin et/ou sel alcalinoterreux dans une quantité de 0,1 à 5 % en poids, de préférence de 0,5 à 2 % en poids, par rapport au ciment.

16. Procédé selon les revendications 11 à 15, **caractérisé en ce que** ledit liant hydraulique est un ciment composé qui comprend du ciment Portland et un matériau se substituant au clinker.

17. Procédé selon l'une des revendications 11 à 16, **caractérisé en ce que** ladite alkanolamine est ajoutée au clinker de ciment avant le broyage.

18. Procédé selon l'une des revendications 11 à 16, **caractérisé en ce que** ladite alkanolamine est ajoutée au ciment broyé, au liant ou à l'eau de gâchage.

19. Utilisation d'un adjuvant comprenant une alkanolamine répondant à la formule 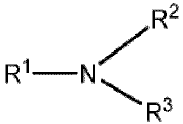 dans laquelle R¹ représente un alkyle pourvu d'au moins 3 groupes hydroxyle et R² et R³ représentent, indépendamment l'un de l'autre, un groupe alkyle ou un groupe alkanol mono- ou polyvalent, ainsi qu'un sulfate alcalin, pour accélérer la prise de liants hydrauliques.

20. Utilisation selon la revendication 19, **caractérisée en ce que** R¹ représente un groupe trihydroxyalkyle comprenant 2 à 6 atomes de C, de préférence 3 à 5 atomes de C, et notamment un groupe tris-(hydroxyméthyl)méthyle.

21. Utilisation selon les revendications 19 ou 20, **caractérisée en ce que** le groupe alkyle ou alkanol de R² et de R³ comprend 1 à 6 atomes de C, de préférence 1 à 4 atomes de C.

22. Utilisation selon l'une des revendications 19 à 21, **caractérisée en ce qu'**en outre, un agent accélérateur, un agent réducteur de retrait, des pigments, des agents moussants, des inhibiteurs de corrosion, des agents retardateurs, des agents formateurs de pores d'air, des agents d'élimination d'air et/ou des agents plastifiants sont contenus.

23. Utilisation selon l'une des revendications 19 à 22, **caractérisée en ce qu'**en outre, au moins une autre alkanolamine est contenue, choisie parmi la mono-, di- et triéthanolamine, la mono-, di- et triisopropanolamine, le tris-(hydroxyméthyl)aminométhane, la N-méthyldiéthanolamine, le 2-amino-2-méthyl-1,3-propanediol, la N-butyldiéthanolamine, la N,N-bis-(2-hydroxyéthyl)-2-propanolamine, la N,N-bis-(2-hydroxypropyl)-N-(hydroxyéthyl)amine, le di(hydroxyéthyl)-1,2-diaminopropane, le tétra-(hydroxyéthyl)-1,2-diaminopropane, une polyglycoldiamine pourvue de groupes éthoxy, la N,N,N'-tri(hydroxyéthyl)éthylènediamine, la N,N,N'-tri(hydroxyéthyl)diéthylènediamine, la N,N'-di(hydroxyéthyl)éthylènediamine, la N,N'-bis-(2-hydroxypropyl)diéthylènetriamine, la N,N,N',N'-tétra(hydroxyéthyl)éthylènediamine, la N,N,N',N',N"-penta(hydroxyéthyl)diéthylènetriamine, la N,N'-bis-(2-hydroxypropyl)-N,N',Ni-tri(hydroxyéthyl)diéthylènetriamine, la poly(hydroxyéthyl)polyéthylèneimine, la poly(hydroxyalkylée)polyéthylèneamine, le 1,2-diaminopropane, la polyglycoldiamine et leurs mélanges.

24. Utilisation selon l'une des revendications 19 à 23, **caractérisée en ce qu'**en outre, un polyol organique est contenu, issu du groupe des polyols en C₂-C₆ ou de leurs mélanges.

25. Utilisation selon l'une des revendications 19 à 24, **caractérisée en ce qu'**en outre, un sel d'ammonium, sel alcalin ou sel alcalinoterreux de nature hydrosoluble est contenu.

26. Utilisation selon la revendication 25, **caractérisée en ce que** ledit sel est un hydroxyde, chlorure, thiocyanate, nitrate, nitrite, carbonate, bicarbonate, acétate, sulfate, sulfite, formiate, phénolate, silicate, gluconate ou l'un de leurs mélanges.

27. Utilisation selon l'une des revendications 19 à 26, **caractérisée en ce que** du sulfate de sodium et/ou potassium est contenu.

28. Utilisation selon l'une des revendications précédentes, **caractérisée en ce que** ladite alkanolamine se présente sous forme d'un sel ou d'un ester d'un acide organique.
